# EUROPEAN PATENT SPECIFICATION

(11) **EP 3 478 517 B1**
(45) Date of publication and mention of the grant of the patent: **09.12.2020**
(21) Application number: 17755269.2
(22) Date of filing: 30.06.2017
(51) Int. Cl.: B60C 5/00, B60C 17/06

(54) **VEHICLE WHEEL ASSEMBLY COMPRISING A NON-PNEUMATIC TIRE AND AN INLAY**
FAHRZEUG MIT EINEM NICHTPNEUMATISCHEN REIFEN ANGEORDNET MIT EINEM SCHLAUCH
VEHICULE MUNI D' UN PNEU NON PNEUMATIQUE ASSOCIÉ AVEC UNE CHAMBRE TORIQUE

(30) Priority: 01.07.2016 NL 2017091
(43) Date of publication of application: 08.05.2019
(73) Proprietor: Kesteloo, Kevin Sascha, 1764 HS Breezand (NL); Van Den Haak, Neil Johannes, 2377 DK Oude Wetering (NL)
(72) Inventor: Kesteloo, Kevin Sascha, 1764 HS Breezand (NL); Van Den Haak, Neil Johannes, 2377 DK Oude Wetering (NL)
(74) Representative: Hubregtse, Teunis
(86) International application number: PCT/NL2017/050434
(87) International publication number: WO 2018/004344

(56) References cited:
- LU-A1- 40 689
- US-A1- 2016 167 454

## Description

The invention relates to a vehicle wheel assembly, to a vehicle comprising such assembly and to method of making such assembly.

One of the major disadvantages of riding pneumatic tires is that the pressurized air inside may escape when the tire is punctured. This results in a so-called flat tire, which makes the tire essentially unsuitable for further riding. Only after treatments such as sealing or replacing the punctured tire, riding with the tire can be continued.

Many efforts have been performed to overcome this disadvantage. One of the most prominent solutions is the use of non-pneumatic tires. Such tires do not require the injection of a gas to gain a particular shape and resilience, but instead are made of a solid medium and do not have an air compartment for inflation. The properties of such tires, however, are still remote from those of pneumatic tires. For example, a person riding a vehicle with non-pneumatic tires often still experiences insufficient comfort as compared to pneumatic tires. In addition, the rolling resistance of many non-pneumatic tires is substantially higher than that of pneumatic tires. Another unfavourable property of many non-pneumatic tires is that during a standstill they slowly deform at the interface with the ground under their own weight and that of the vehicle in which they are mounted. As a result, the thread of the tire is not completely circular anymore, which is noticeable as a recurring bump each time the deformed section of the thread contacts the ground during rotation of the tire. Although such deformation is usually temporary and likely disappears during riding with the tire, it is undesired and causes inconvenience.

The conventional pneumatic tire is in most cases an inner tire around which an outer tire is present that provides protection to the pneumatic tire. An outer tire may also provide surface adhesion (*i.e.* grip on the road) by means of a specific thread. In view of the abundancy of outer tires in the consumer market, the versatility in which they can be manufactured and the fact that wheel rims and outer tires have evolved as interrelated products, it may be beneficial to provide a non-pneumatic inner tire that can suitably be mounted on a conventional wheel rim together with a conventional outer tire.

US2016/167454 A1 and also LU 40 689 A1 are prior art documents which disclose similar concepts of partially non-pneumatic inner tires.

It is therefore an objective of the present invention to provide a non-pneumatic tire that may serve as an alternative to pneumatic tires. It is in particular an object to provide a non-pneumatic inner tire that can be placed in a conventional assembly of an outer tire, an inner tire and a wheel rim.

It is also an objective to provide an assembly of a non-pneumatic inner tire, an outer tire and a wheel rim that has improved properties with respect to known non-pneumatic assemblies. It is in particular an objective to overcome one or more of the abovementioned disadvantages.

It has now been found that a particular inner tire may be used in a particular fashion to reach one or more of these goals.

Accordingly, the present invention relates to a vehicle wheel assembly, comprising
- a wheel rim having a rim bottom and two opposed circular rim flanges opposing each other;
- an outer tire having two beads secured at the circular rim flanges;
- a non-pneumatic inner tire, which is at least partly enclosed by the outer tire;
   characterized in that
   1) the inner tire in the assembly is in a compressed state S1, which state is compressed as compared to a relaxed state S2 when the inner tire is not enclosed by the outer tire, the compression being such that the cross-sectional surface area SA of the inner tire, which area is perpendicular to the plane of the tire, is smaller in state S1 than in state S2; and
   2) an inlay is present between the rim bottom and the inner tire, wherein the inlay is in contact with the inner tire as well as with the rim bottom.

The non-pneumatic inner tire in an assembly of the invention in particular comprises an expanded polymer such as an expanded plastic and/or an expanded rubber. By an expanded polymer is meant that the material during its formation and/or shaping has been expanded by a blowing agent to thereby generate a closed cell structure in the material. Materials in an expanded form therefore have a substantially reduced density as compared to their non-expanded form. The density of an expanded polymer in an assembly of the invention is usually in the range of 150-750 kg m⁻³, in particular in the range of 200-400 kg m⁻³. It is for example 700 kg m⁻³ or less, 600 kg m⁻³ or less, 550 kg m⁻³ or less, 500 kg m⁻³ or less, 450 kg m⁻³ or less, 400 kg m⁻³ or less, 350 kg m⁻³ or less, 300 kg m⁻³ or less, 250 kg m⁻³ or less or 200 kg m⁻³ or less.

The expanded polymer may be selected from the group of expanded polypropylene, expanded poly(ethylene-vinyl acetate), expanded polyethylene and expanded rubbers such as ethylene propylene diene monomer (EPDM) rubber, silicone rubber, polytetrafluoroethylene rubber and chloroprene rubber.

Preferably, the inner tire is made from expanded thermoplastic polyurethane (E-TPU).

An assembly of the invention comprises a conventional composition of a wheel rim and an outer tire. The outer tire has two beads and the wheel rim has two opposed circular rim flanges. The outer tire is mounted onto the wheel rim by pulling the beads over the rim flanges so that the two beads are present around the rim bottom (*i.e.* around the receded part of the rim that is present between the two rim flanges). In this way, the beads are secured at the flanges and the outer tire is strongly connected to the rim.

According to common practice, either a pneumatic inner tire or a non-pneumatic inner tire can be placed in an outer tire. A pneumatic inner tire can be filled with a gas to form an inflatable cushion of a particular shape. A non-pneumatic inner tire does not require the injection of a gas to gain a particular shape and the capability to act as a cushion. It derives its form and resilience from the presence of a solid medium instead of a major air compartment for inflation. This discrimination from pneumatic tires is often provided with the wording "massive tire". On a smaller scale, however, a massive tire may still comprise compartments of air, for example when the material of the inner tire is made of a porous material, such as a material with a closed or an open cell structure.

In a wheel assembly of the invention, the inner tire is a non-pneumatic inner tire. Typically, the inner tire is for the largest part enclosed by the outer tire. Such placement of an inner tire in an outer tire often also occurs in conventional wheel assemblies.

In addition, an inlay is present in an assembly of the invention. The inlay is present on the wheel rim, typically residing between the rim flanges and resting on the rim bottom. The inlay is present along the entire circumference of the wheel rim. Accordingly, the inlay is in principle circular. It can be regarded as an elongated shape (*e.g*. tube-like), wherein both ends are connected to each other so that an endless shape (a ring-shape) is formed.

Besides being for the largest part enclosed by the outer tire, the inner tire is also partly enclosed by the inlay.

In an assembly of the invention, the inner tire preferably comprises expanded thermoplastic polyurethane (E-TPU). In particular, it essentially consists of E-TPU. This material is different from thermoplastic polyurethane (TPU) in that it is expanded, *i.e.* it contains cells comprising gas (*e.g.* air) and as a result has a substantially lower density, *e.g.* 600 kg m⁻³ or lower, 450 kg m⁻³ or lower, 350 kg m⁻³ or lower, 300 kg m⁻³ or lower, 250 kg m⁻³ or lower, or 200 kg m⁻³ or lower.

E-TPU is typically a closed-cell particle foam, which is commercially available. The E-TPU particle foam itself exists as a collection of lightweight beads, while shaped products can be manufactured therefrom by processing them in a mold at elevated temperatures. The pre-foamed beads are then typically introduced into the mold by air pressure, so that they are pressed together in the mold. Thereafter, in the mold they are exposed to hot steam so that they bond together.

In an assembly of the invention, the density of the E-TPU in the inner tire is usually in the range of 150-400 kg m⁻³. In particular, the density is in the range of 200-300 kg m⁻³. These values refer to the E-TPU as such, *i.e.* without being compressed, corresponding to the relaxed state S2 as defined hereinbelow.

In the present invention, the E-TPU was for example obtained from BASF under the name "Infinergy"™ as beads. According to procedures known in the art, the expanded beads were processed in a mould under steam pressure to create the inner tires of a particular shape and size. The inner tires that were used for the wheel assemblies of the invention had a density of approximately 250 kg m⁻³. The invention is however not limited to E-TPU inner tires of this density. As stated above, it may also be in the range of 150-400 kg m⁻³.

In an assembly of the invention, the inner tire is compressed by the outer tire and the inlay. This means that it is compressed relative to the volume it would occupy in the absence of the outer tire and the inlay, *i.e.* when it is completely relaxated. This is for example the case when it lies on a surface while no other objects are exerting pressure anywhere on the tire. For the purpose of the invention, when the inner tire is in a compressed state (*i.e.* in the outer tire), then this state is defined as state S1. When the inner tire is not compressed, then it is in a relaxed state defined as state S2.

The degree of compression may be defined by the change in the dimensions of the tire when it is brought from S2 to S1, for example by a change in the thickness (*i.e.* diameter) of the tire, a change in a cross-sectional surface area of the tire or a change in the volume of the tire. Preferably, the degree of compression is based on the change that the cross-sectional surface area undergoes, which is the area that is perpendicular to the plane of the tire (*i.e.* perpendicular to the plane in which the tire would normally rotate when present in a wheel assembly in a vehicle). For the purpose of the invention, this cross-sectional surface area will be referred to as the cross-sectional surface area of the tire cylinder, and will abbreviated as SA. When the tire is in state S1, then this cross-sectional surface area is defined as SA_{S1}, and when the tire is in S2, then this cross-sectional surface area is defined as SA_{S2}. The degree of compression based on SA may then be defined as C_{SA} = SA_{S1} / SA_{S2}, which is a dimensionless number.

When SA_{S2} and SA_{S1} would both be circular, then the diameter (DM) of the tire could also be used to define the degree of compression, leading to the formula C_{DM} = DM_{S1} / DM_{S2}. However, in most wheel assemblies of the invention, the inner tire is not evenly compressed at its surface, leading to a cross-sectional surface area of the tire cylinder that is not circular in state S1. The degree of compression is then preferably based on the surface area itself and is thus preferably represented by C_{SA}. Before compression, however, the tire cylinder may indeed have a circular cross-sectional surface area, because it can be manufactured in that way. This allows a definition of the relaxed inner tire by means of DM_{S2}. This is useful for quickly identifying particular sizes of inner tires, since the sizes of commercially available tires are often primarily specified by their (outer) diameter.

In an assembly of the invention, C_{SA} is always less than 1.00. It may be 0.99 or less, 0.98 or less, 0.97 or less, 0.96 or less, 0.95 or less, 0.94 or less, 0.93 or less, 0.92 or less, 0.91 or less, 0.90 or less, 0.89 or less, 0.88 or less, 0.87 or less, 0.86 or less, 0.85 or less, 0.84 or less, 0.83 or less, 0.82 or less, 0.81 or less, 0.80 or less, 0.79 or less, 0.78 or less, 0.77 or less, 0.76 or less, 0.75 or less, 0.74 or less, 0.73 or less, 0.72 or less, 0.71 or less, 0.70 or less, 0.69 or less, 0.68 or less, 0.66 or less, 0.64 or less, 0.62 or less, 0.60 or less, 0.58 or less or 0.55 or less. These values correspond to other values for C_{DM}, which can be calculated. For example, a C_{SA} of 0.94 corresponds to a C_{DM} of 0.97; a C_{SA} of 0.90 corresponds to a C_{DM} of 0.95; and a C_{SA} of 0.81 corresponds to a C_{DM} of 0.90.

Usually, the C_{SA} is not smaller than 0.50. It may be 0.50 or more, 0.55 or more, 0.60 or more, 0.65 or more, 0.68 or more, 0.70 or more, 0.72 or more, 0.74 or more, 0.76 or more, 0.78 or more, 0.80 or more, 0.82 or more, 0.84 or more, 0.86 or more, 0.88 or more, 0.90 or more, 0.92 or more, 0.94 or more, 0.96 or more or 0.98 or more.

A pneumatic tire is usually only fully inflated after it has been enclosed by the outer tire and (optionally) the rim, otherwise it is essentially impossible to place it in the outer tire. A non-pneumatic inner tire, on the other hand, is often difficult to mount on a rim and in an outer tire, because it cannot be deflated and has a volume that cannot be changed easily. In addition, while good riding properties usually require a certain stiffness of the tire, this stiffness often hampers the (manual) mounting of the non-pneumatic tire into an outer tire and onto a wheel rim. Therefore, conventional non-pneumatic inner tires often don't have a good match with the outer tire and the wheel rim. This is disadvantageous for the riding properties and the wear of the outer tire.

In an assembly of the invention, the (maximally achievable) volume of the outer tire (*i.e.* the volume of the space defined by the outer tire, the inlay and possibly the rim) is smaller than that of the unassembled inner tire. As a result, the inner tire is in a compressed state after assembly, *i.e.* it is under tension. It was expected that assembling an assembly of the invention would therefore be at least as difficult as assembling an assembly with a conventional non-pneumatic inner tire such as a PU inner tire. This appeared, however, not to be the case. Assembly can for example easily be performed by conventional mounting tools, eventually specially adapted for this purpose. This is important for consumers who want to use E-TPU tires of the invention in their conventional wheel assembly in *e.g*. their bicycle or wheelchair, because they (or their bicycle repair shop) can replace a (punctured) pneumatic inner tire by a new non-pneumatic E-TPU tire without too much effort. In addition, such use of an E-TPU inner tire in a conventional wheel assembly does not require the purchase of a new outer tire and/or a new rim in the case that these have not been worn out.

Further, it was surprisingly found, that the riding properties of an assembly of the invention were sufficient and comparable to those of conventional assemblies with pneumatic tires. Moreover, they were even improved with respect to those of conventional assemblies having a non-pneumatic tire.

In conventional wheel assemblies of an outer tire and a (pneumatic or non-pneumatic) inner tire wherein beads of the outer tire are secured behind rim flanges, the inner tire is for the most part enclosed by the outer tire, *i.e.* most of the outer surface of the inner tire is in contact with the inner surface of the outer tire. Only the surface of the inner tire that is present between the beads is not covered by the outer tire. Because of the receded rim bottom (which is an inherent characteristic of the wheel rim due to presence of the rim flanges), there is usually a cavity between the rim bottom and the surface of the inner tire that is present between the beads. Accordingly, this surface part of the inner tire is at an interface with air and is therefore not supported by any solid structural part of the wheel assembly.

Especially for rims wherein the distance between the rim flanges is relatively small, such as 16-22 mm, a cavity remains between the inner tire and the rim bottom. When the distance is 23 mm or larger, then the inner tire may touch the rim bottom.

For wheel assemblies wherein a non-pneumatic inner tire comprising an expanded polymer, such as expanded thermoplastic polyurethane, is placed in an outer tire under compression, it was surprisingly found that filling the air cavity with a hard and solid material results in highly improved riding properties of the wheel assembly. The air cavity is then at least partially filled, the filling is distributed evenly around the circumference of the wheel rim and it is in contact with the inner tire. This filling is performed with an inlay according to the invention.

The inlay in principle rests on the rim bottom. The rim bottom may be covered with a thin protective layer that covers the holes in the rim that allow connection of the wheel's spikes. In such case, the protective layer can be regarded as the rim bottom and the inlay then rests thereon.

The inlay has an inner circumference. When mounted in a wheel assembly of the invention, this is the circumference facing the rim bottom and the center of the entire wheel assembly. The inlay also has an outer circumference. When mounted in a wheel assembly of the invention, this is the circumference facing the inner tire.

The inlay has a thickness, which is defined as the distance between the inner circumference and the outer circumference. When mounted in a wheel assembly, the thickness of the inlay defines the distance between the rim bottom and the inner tire. The thickness of the inlay is a distance in radial direction of the wheel assembly. Since it is usually required that a wheel assembly is perfectly circular, the thickness of an inlay of the invention is in principle constant over its entire circumference.

It appeared that in assemblies wherein the inner tire is not supported by an inlay, there is substantial deformation of the E-TPU. This deformation occurs because the E-TPU is pressed against the small opening that is formed by the flanges, and a small part may even pass the opening and move into the cavity. Thus, when no inlay is absent, a small part of the E-TPU inner tire is under a high tension and is highly compressed. This increases the wear of the E-TPU, which is undesired. In addition, the squeezing of the E-TPU through the small opening formed by the two beads of the outer tire and the lack of solid support to the material that is pressed into the cavity leads to an inefficient energy absorption and energy release when riding a wheel assembly that lacks an inlay.

When, on the contrary, an inlay is present on the wheel rim, the E-TPU inner tire is not allowed to enter the small opening between the beads of the outer tire. In this way, the strong local deformation and the accompanying high local tension in the material in the proximity of the beads are strongly reduced. In addition, loading the wheel assembly does neither result in the pressing of the material though the opening between the beads against air. This increases the lifetime of the inner tire.

Further, measurents demonstrate that the rolling resistance of an assembly of the invention (*i.e.* with an inlay) is significantly lower than that of the assembly lacking the inlay. This confirms that energy losses occur to a lesser extent in an assembly of the invention.

In contrast, however, in conventional wheel assemblies comprising a pneumatic inner tire or a non-pneumatic (massive) inner tire (such as a polyurethane inner tire), no significant beneficial effects of an inlay were observed.

An inlay is also advantageous in wheel assemblies wherein the inner tire already touches the rim bottom, such as assemblies with a relatively large flange-to-flange distance. Also in such assemblies, the inner tire has been deformed, in particular due to the squeezing through the opening between the beads of the outer tire, more in particular due to the fact that the E-TPU is present in the outer tire under pressure. In such assemblies, the presence of the inlay prevents the disadvantageous deformation and squeezing through the opening between the beads.

A further advantage of the inlay is that it can be used to tune the hardness of the tire. It is for example possible to adapt the hardness to the weight of the bicycle, to the weight of the person riding the bicycle, and to the weight of eventual further loadings of the bicycle (luggage). In this way, it is not necessary to change the E-TPU inner tire when a softer or a harder tire is desired, neither is it necessary to have a plurality of E-TPU inner tires in stock. Changing of just the inlay, which is in principle cheaper than an E-TPU inner tire, suffices in such cases.

The degree of compression of the inner tire is stable over time. The inlay appears to play an important role herein, because in the absence of an inlay the inner tire is slowly squeezed though the opening defined by the two beads of the outer tire. This leads to an increase of the SA_{S1} and thus to a C_{SA} that moves towards unity over time. Thus, the features of 1) the compressed E-TPU inner tire and 2) the inlay synergistically operate together and are also as a whole responsible for the advantageous effects of the invention.

In order to be effective, the inlay in an assembly of the invention must at least contact the rim bottom as well as the E-TPU inner tire. Usually, the inlay is squeezed between the inner tire and the rim bottom, *i.e.* the inner tire as well as the rim bottom presses against the inlay in substantially opposite directions. In this way, during riding the wheel, the inner tire is, at least partially, prevented from being squeezed though the opening between the beads of the outer tire. The compression of the inner tire in the assembly due to the riding (including the absorption of eventual shocks due to an uneven road surface) then occurs more homogeneously thoughout the material of the inner tire, and not just mostly in the proximity of the beads of the outer tire.

Thus, in order to be effective, the inlay should at least have a thickness that is sufficient to touch the rim bottom as well as the inner tire. Accordingly, the absolute thickness of the inlay mainly depends on the dimensions of the wheel rim and the design of the flanges that secure the beads. Usually, the thickness of the inlay is 4 mm or more. It may also be 5 mm or more, 6 mm or more, 7 mm or more, 8 mm or more, 10 mm or more, 12 mm or more, 15 mm or more or 20 mm or more.

For example, for a rim having the rim flanges at a mutual distance in the range of 20-22 mm, the inlay preferably has a thickness in the range of 10-12 mm. In such wheel assembly, the inner tire has a diameter of preferably 36-38 mm.

The inlay has a main inner diameter, which is defined as the diameter of the circle enclosed by the inlay. The main inner diameter depends on the diameter of the rim flanges, which is the diameter of the circle formed by the rim flanges. The main inner diameter of the inlay is preferably smaller than that of the the rim flanges, so that the inlay has to be strectched in order to pull it over the rim flanges. The main inner diameter is for example 99% or less, 98% or less, 97% or less, 96% or less, 95% or less, 94% or less, 92% or less or 90% or less of that of the rim flanges. A too small main inner diameter makes it hardly possible to pull the inlay over the rim flange, while a too large diameter cause the inlay to wrinkle and form an irregular shape.

As described above, an inlay of the invention limits the movement of the inner tire towards the rim bottom. Therefore, it is preferred that the inlay is made of a material that is hardly compressible. For example, the material of the inlay has a hardness of Shore 75A or more, 80A or more, 85A or more, 90A or more, or 95A or more. Alternatively, it has a Young's modulus of 10 MPa or more.

The inlay may be made of a rubber or a plastic that has the required hardness.

The cross-section of the inlay in the plane normal to the plane in which the inlay normally rotates may be circular, oval, rectangular, square or any other suitable shape.

The inlay may be hollow, like a tube. It may also be massive, *i.e.* of a continuous and solid medium. A hollow inlay has the advantage of a lower mass, which is usually beneficial when the wheel assembly is part of a vehicle. A hollow tube in principle requires a material of a higher hardness than a massive inlay, because a hollow object is usually more compressible. For a hollow inlay, for example, a tube may be used of a material hardness Shore 95A, or more. The tube may have a wall thickness in the range of 1-3 mm, and a total diameter in the range of 5-14 mm, in particular in the range of 8-12 mm.

In principle, the degree of compression is independent of the absolute dimensions of the tire. Therefore, an inner tire may in principle have any SA_{S2} and DM_{S2}. Depending on the type of vehicle wherein an assembly of the invention is used, the dimensions of the inner and outer tire may differ. For the purpose of bicycles and wheelchairs, for example, the DM_{S2} of the inner tire is preferably in the range of 20-50 mm (corresponding to an SA_{S2} in the range of 314-1,963 mm²). It may also be in the range of 30-40 mm (corresponding to an SA_{S2} in the range of 707-1,257 mm²), or in the range of 33-37 mm (corresponding to an SA_{S2} in the range of 855-1,075 mm²).

DM_{S2} may also be 48 mm or lower, 46 mm or lower, 44 mm or lower, 42 mm or lower, 40 mm or lower, 39 mm or lower, 38 mm or lower, 37 mm or lower, 36 mm or lower, 35 mm or lower, 34 mm or lower, 33 mm or lower, 32 mm or lower, 31 mm or lower, 30 mm or lower, 29 mm or lower, 28 mm or lower, 27 mm or lower, 26 mm or lower, 25 mm or lower, 24 mm or lower, 23 mm or lower, 22 mm or lower or 21 mm or lower.

DM_{S2} may be 20 mm or more, 21 mm or more, 22 mm or more, 23 mm or more, 24 mm or more, 25 mm or more, 26 mm or more, 27 mm or more, 28 mm or more, 29 mm or more, 30 mm or more, 31 mm or more, 32 mm or more, 33 mm or more, 34 mm or more, 35 mm or more, 36 mm or more, 37 mm or more, 38 mm or more, 39 mm or more, 40 mm or more, 42 mm or more, 44 mm or more, 46 mm or more or 48 mm or more.

SA_{S2} may be 1,800 mm² or less, 1,500 mm² or less, 1,300 mm² or less, 1,150 mm² or less, 1,000 mm² or less, 900 mm² or less, 800 mm² or less, 700 mm² or less, 600 mm² or less, 500 mm² or less or 400 mm² or less. SA_{S2} may be 350 mm² or more, 400 mm² or more, 500 mm² or more, 600 mm² or more, 700 mm² or more, 800 mm² or more, 900 mm² or more, 1,000 mm² or more, 1,150 mm² or more, 1,300 mm² or more, 1,500 mm² or more or 1,700 mm² or more.

It has to be noted that the limit for manually compressing an inner tire that is made of E-TPU with a particular compressibility, is in fact dependent on 1) the diameter of the inner tire and 2) the degree of compression C_{SA} that is to be achieved. A higher diameter can only be used when C_{SA} is closer to unity, and a lower diameter can also be used when C_{SA} is more remote from unity.

In an embodiment, a wheel assembly was made from an inner tire with a DM_{S2} of 37 mm (corresponding to an SA_{S2} of 1075 mm²). This inner tire was placed in a particular outer tire with a size that required compression of the inner tire. The dimensions of the inside of an outer tire are usually not specified when purchasing a tire; outer tires are often sold under a name that carries only the width of the tire in it. In this particular case, the width was 40 mm. When the resulting assembly of the invention was analyzed, SA_{S1} was measured to be 800 mm², from which a C_{SA} of 0.74 was calculated.

As mentioned above, bicycles and wheelchairs are vehicles wherein a wheel assembly of the invention can be applied. For this application, DM_{S2} of the inner tire is preferably in the range of 20-50 mm. Wheel assemblies of the invention may however find wider application, for example in electric bicycles (*i.e.* bicycles with an integrated electric motor for propulsion, commonly known as e-bikes), scooters, mobility scooters, motorcycles, cars, trucks, wheelbarrows, trolleys, strollers, prams, and hand trucks. In these applications, the DM_{S2} of the inner tire is usually larger than in bicycles. It is for example in the range of 40-250 mm (SA_{S2} is then in the range of 1,257-49,087 mm²), 50-200 mm (SA_{S2} is then in the range of 1,964-31,416 mm²), 75-150 mm (SA_{S2} is then in the range of 4,418-17,671 mm²) or in the range of 100-250 mm (SA_{S2} is then in the range of 7,854-49,087 mm²).

The cross-sectional surface of the tire cylinder of an inner tire of the invention is not necessarily circular in state S2. It may also have an oval or elliptic shape, or any other shape that is suitable in a particular outer tire. An oval or elliptic shape may in particular be oriented such that its longest diameter is a line in the plane of the tire (*i.e.* the plane in which the tire normally rotates). In this way, the pressure exerted by the outer tire may vary around the periphery of the cross-sectional surface in such a way that the highest pressure is exerted along the line between the thread of the tire and the inlay facing the thread. Due to this shape, the inner tire has a better fit between the two beads that are secured at the flanges. In addition, there is more force pushing the inner tire towards the inlay. These effects result in a higher filling percentage of the space defined by the outer tire and the wheel rim, which may improve the properties of the wheel assembly, in particular the rolling resistance, the road holding and the stability of the assembly when riding a curve.

Beside the diameter of the tire cylinder (which is perpendicular to the plane in which the tire would normally rotate), a tire in an assembly of the invention also has a diameter in the plane in which the tire normally rotates. For the purpose of the invention, this diameter will be termed the main diameter of the tire. Common main diameters of bicycle outer tires are for example 12 inch, 16 inch, 20 inch, 24 inch, 26 inch or 28 inch. The main diameter of the tire may either be the diameter of the circle enclosed by the tire ("main inner diameter"), or the diameter of the outer periphery of the tire ("main outer diameter", corresponding with the largest dimension of the tire).

The main outer diameter of the inner tire in state S1 will normally equal the main outer diameter of the outer tire minus twice the thickness of the thread of the outer tire.

The main inner diameter of the inner tire in state S2 may be within a certain range when it is to be mounted on a rim with a particular size. Different diameters can be accommodated for in the outer tire since the inner tire may adapt its size and form to that of the outer tire in S1. An inner tire in state S2 may for example have a main inner diameter that is smaller than the diameter of the rim flanges. This means that the inner tire needs to be stretched in order to pull it over the rim flanges, as is usually also the case when a conventional outer tire is mounted on the wheel rim. The main inner diameter is usually 90% or more of the diameter of the rim flanges. It may also be 93% or more, 95% or more, 97% or more, or 99% or more.

The main inner diameter of the inner tire in state S2 may also be larger than the diameter of the rim flanges, as is often the case with a conventional inflated pneumatic inner tire. The main inner diameter may be 101% or more, 103% or more, 105% or more, 107% or more, 110% or more or 113% or more of the diameter of the rim flanges. It is usually 115% or less of the diameter of the rim flanges. It may also be 110% or less, 107% or less, 105% or less, 103% or less, 101% or less, 98% or less or 95% or less of the diameter of the rim flanges. Usually, it is in the range of 92-118%, or in the range of 94-110% of the diameter of the rim flanges. A too large main inner diameter may hinder a good positioning of the inner tire in the outer tire, since the inner tire may wrinkle in the outer tire, leading to an irregular and/or distorted assembly of inner tire and outer tire. During riding the assembly, such irregularities and/or distortions may lead to a recurring bump each time they contact the ground.

As already indicated above, the inner tire in an assembly of the invention is often not evenly compressed around the periphery of the cross-sectional surface area of the tire cylinder, which has the result that the surface area in state S1 often has a different shape than that in state S2. A deviation from the original shape in particular occurs at the side of the wheel rim, as compared to the side of the thread. The two beads of the outer tire are squeezed together by the rim flanges, so that the cross-section of the compressed inner tire reaches a form that resembles the shape of a pear. Its main part is round or oval (at the thread and the lateral faces), which has a small extension on one side (at the inlay).

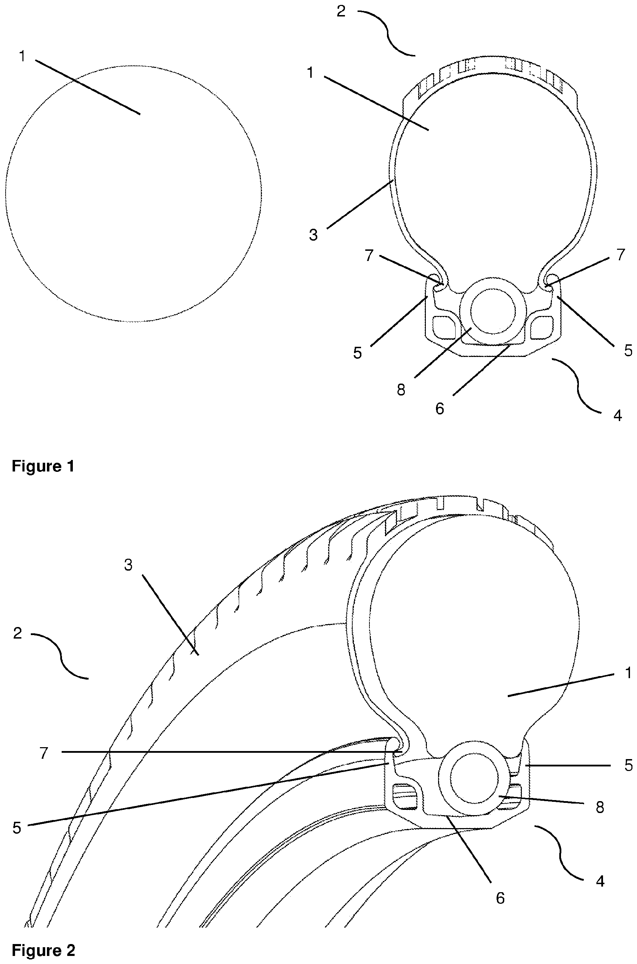

Figure 1 displays how the cross-sectional surface area SA of the inner tire may change when the tire goes from state S1 to state S2. The left drawing in Figure 1 is a cross-sectional view of the tire cylinder of the inner tire (1), representing the inner tire in state S2. The right drawing in Figure 1 is also a cross-sectional view of the tire cylinder of the inner tire, but in this case the inner tire is present in an assembly (2) of the invention, representing the inner tire in state S1. The assembly (2) comprises an outer tire (3) and a wheel rim (4), the wheel rim (4) comprising two rim flanges (5) and a rim bottom (6). The outer tire (3) is connected to the wheel rim (4) by means of two beads (7) that are secured behind the rim flanges (5). In addition, an inlay (8) according to the invention is present between the rim bottom (6) and the E-TPU inner tire (1). The changed shape of the cross-sectional surface of the tire cylinder due to the compression can clearly be seen in Figure 1, since it is not circular anymore when the inner tire is present in an assembly (2) of the invention.

Figure 2 represents a three-dimensional representation of an assembly (2) of the invention, showing the inner tire (1), the outer tire (3) comprising two beads (7) (only one being shown), the wheel rim (4) comprising two rim flanges (5), a rim bottom (6) and the inlay (8).

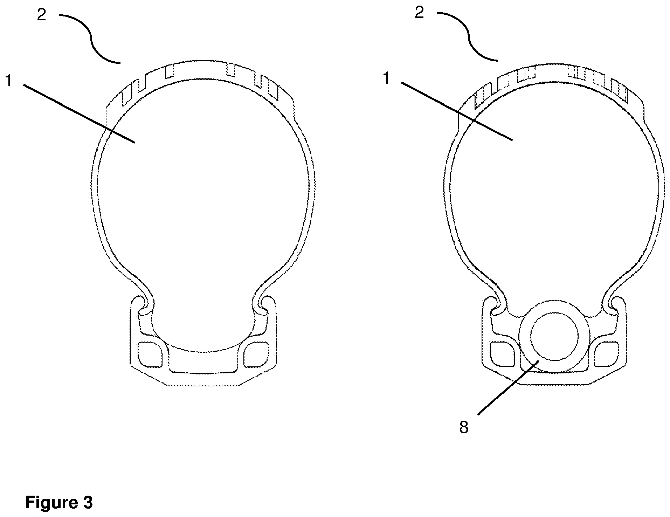

Figure 3 demonstrates the effect of the inlay (8) on the shape of the inner tire (1) in a wheel assembly (2). The image on the right displays the cross-sectional view of an assembly (2) of the invention, wherein the inner tire (1) presses against the inlay (8). The image on the left displays the same assembly (2), but with the difference that the inlay is lacking. This Figure demonstrates the difference in shape and deformation of the inner tire (1) due the inlay (8).

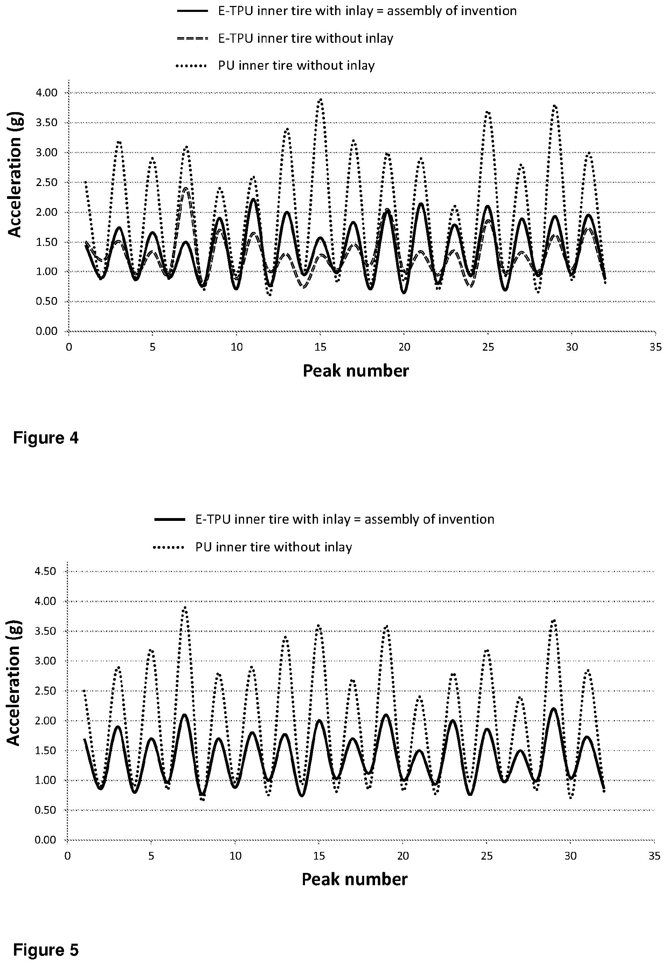

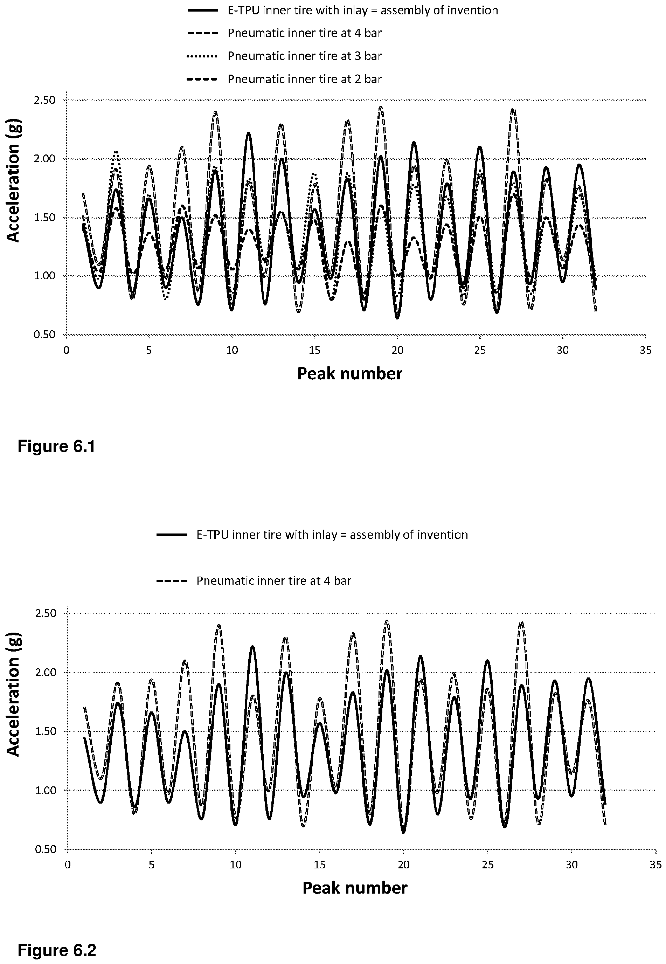

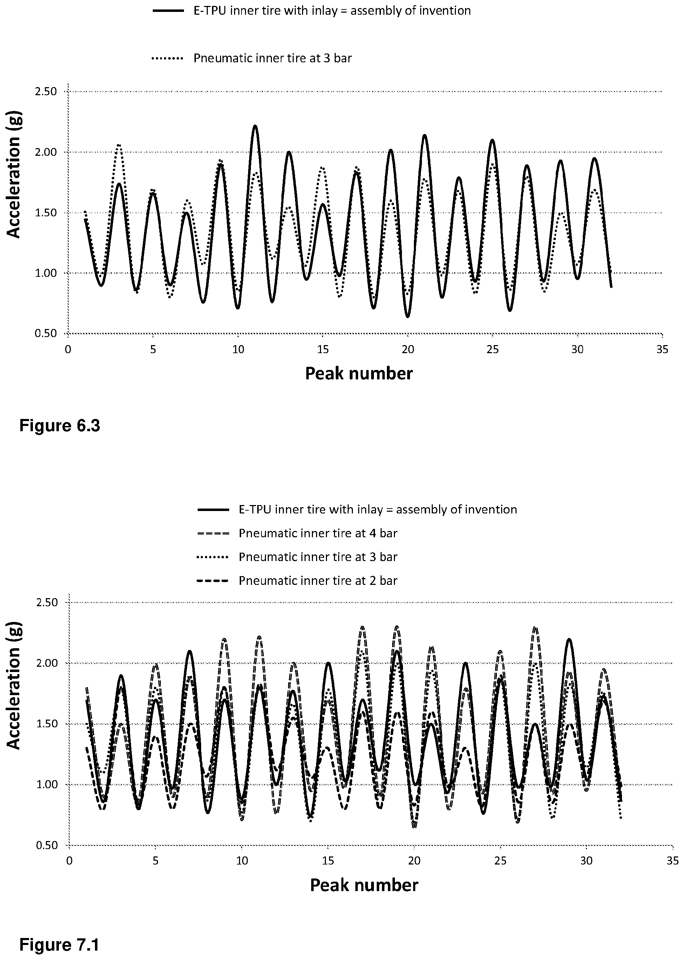

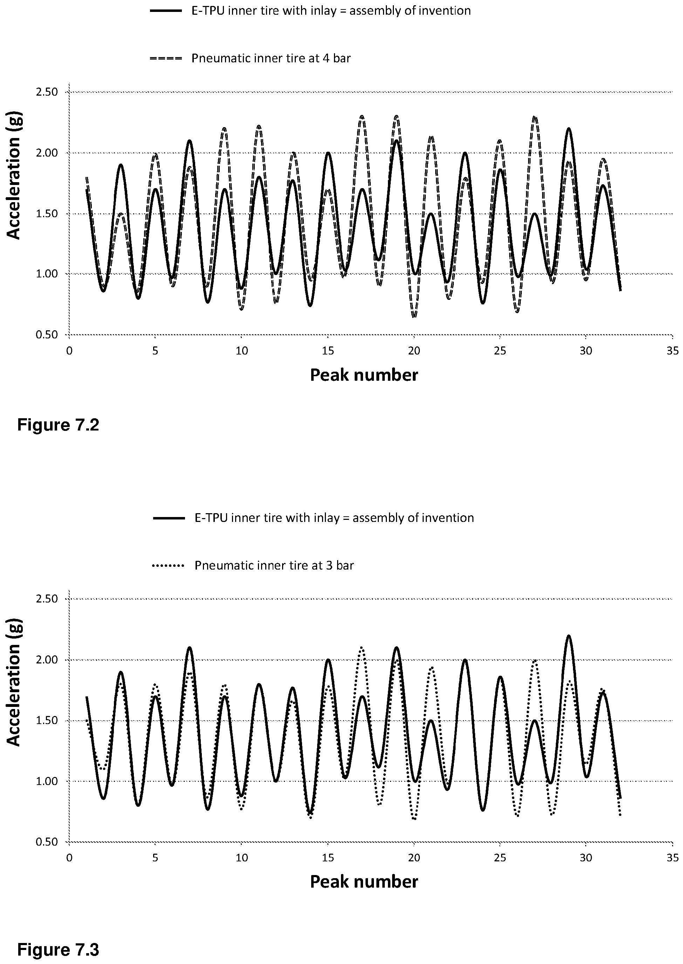

Figures 4-7 display the graphs of the comfort measurements. The comfort of an assembly of the invention was compared with that of the corresponding assembly lacking an inlay, to that of an assembly having a non-pneumatic PU inner tire and to that of an assembly having a pneumatic inner tire at a range of different pressures. Figures 4 and 6 are obtained with a Schwalbe Energizer Plus outer tire, and Figures 5 and 7 with a CST Xpedium Safe outer tire. Figure 6.1 contains four graphs: one representing an assembly of the invention and three representing an assembly with a pneumatic inner tire at 2, 3 and 4 bars. For the sake of clarity, a selection of the four graphs in Figure 6.1 is shown in Figures 6.2 and 6.3. Also Figure 7.1 contains four graphs: one representing an assembly of the invention and three representing an assembly with a pneumatic inner tire at 2, 3 and 4 bars. For the sake of clarity, a selection of the four graphs in Figure 7.1 is shown in Figures 7.2 and 7.3.

The rim flanges may have a separation in the range of 14-30 mm. It may also be in the range of 16-18 mm, in the range of 18-21 mm or in the range of 22-26 mm.

The wheel assemblies according to the invention were investigated by measuring their rolling resistance, driving comfort and deformation under loading with a realistic weight. The values were compared with those obtained when:
1) the E-TPU tire + inlay were replaced with solely a conventional pneumatic inner tire; or
2) the E-TPU tire + inlay were replaced with a conventional non-pneumatic PU inner tire + inlay; or
3) the inlay was removed from a wheel assembly of the invention.

Measuring of the rolling resistance was performed by making use of the pendulum rolling resistance test as described in "The world's most fuel efficient vehicle" (ISBN-10: 3728131342). The measured value is the time during which the wheel is in motion, *i.e.* a longer time corresponds to a lower rolling resistance.

The driving comfort was determined by measuring the vertical acceleration and decelaration in time when a bicycle comprising a wheel assembly of the invention rides over a certain trajectory. Since the trajectory is not flat, the bicycle experiences bumps during riding, which bumps are registered by an accelerometer mounted on the bicycle. The height of the hills and the depth of the valleys of the obtained graph are indicative of the degree of vibration of the bicycle. A high degree of vibration is expressed by high hills and low valleys. This is experienced by a cyclist as less comfortable than a low degree of vibration. During the particular ride, a set of 1060 data points was initially obtained. For aesthetic reasons and easy viewing, the representative 32 highest and lowest amplitudes were selected and plotted as a graph (Figures 4-7).

In addition to the visualization in Figures 4-7, the comfort of the different tires was also compared by calculating the average vertical acceleration of each tire by averaging the 1060 data points of each tire. Table 3 provides an overview of the average vertical accelerations thus obtained, specified for each of the tested tires. These data are in line with the graphs displayed in Figures 4-7.

When riding on an assembly of the invention is compared to riding on a conventional wheel assembly with a pneumatic tire of 2-3 bars, the wear of an outer tire in an assembly of the invention surprisingly appears to occur much slower than that of a conventional wheel assembly with a pneumatic tire of 2-3 bars, because the outer tire with the pneumatic tire undergoes much more indentations than the outer tire with the E-TPU - the indentations in both cases being the result of the relief that is present at the surface on which the tire is riding. Especially maximal indentations (*i.e.* indentation wherein the rim flanges directly bump onto an obstacle and get damaged), can be prevented with an E-TPU tire.

For this reason, the lateral faces of the outer tire in an assembly of the invention (*i.e.* the parts of the outer tire between the thread and the beads; this area is more or less perpendicular to the thread of the tire) can be made of a material of less stringent requirements. In principle, the main function of an outer tire in an assembly of the invention is that is contains the desired thread and is capable of tightly enclosing the inner tire and has the strength to compress the inner tire. Thus, it can be made of less material and/or of a material that does not have to withstand a high number of (maximal) indentations. In addition, since the inner tire cannot run flat because it is non-pneumatic, the outer tire does not need to be puncture proof. The tire may for example be thinner, especially at the lateral faces, due to which it will absorb less energy. This allows the manufacture of vehicle wheel assemblies that have a lower rolling resistance. At at least part of the lateral faces of the outer tire in an assembly of the invention, the thickness is for example 1.5 mm or less, 1.2 mm or less, 1.0 mm or less, 0.9 mm or less, 0.8 mm or less, 0.7 mm or less, 0.65 mm or less, 0.55 mm or less, 0.50 mm or less, 0.45 mm or less, 0.4 mm or less, 0.35 mm or less or 0.3 mm or less.

Another unexpected advantage of an assembly of the invention is that the inner and outer tire do not slip or roll relative to the wheel rim when using the wheel assembly. The compressed inner tire exerts a larger outward force on the outer tire than conventional non-pneumatic inner tires do, so that the friction of the outer tire with the wheel rim is increased. In addition, the inner tire also exerts pressure on the inlay, which also increases the friction with the wheel rim.

Yet another surprising advantage of an assembly of the invention is that during a standstill, it does not noticeably deform at the interface with the ground under its own weight and that of the vehicle in which it is mounted. In conventional non-pneumatic tires, often a recurring bump occurs each time the deformed section of the thread contacts the ground, but with an assembly of the invention, no such irregularities were observed or noticed. This is an unexpected advantage and contributes to the driving comfort of an assembly of the invention.

Having performed the quantitative tests on the comfort, the rolling resistance and the deformation during standstill, it was recognized that not all properties of a wheel assembly can be caught by objective measurements. Riding a bicycle is a total-experience of the rider that is governed by many factors. To investigate whether an assembly of the invention in a bicycle makes a ride on the bicycle more pleasant or enjoyable, a test was performed with a panel of 45 bicycle riders. These riders were asked to follow a particular trajectory on (1) a bicycle having wheel assemblies of the invention and on (2) a comparative bicycle having pneumatic tires. They were then asked to respond to questions about their perception of the riding experience in general, of the rolling resistance, of the comfort, and of the tension of the tires.

Surprisingly, a bicycle having wheel assemblies of the invention appeared to provide a riding experience that is almost identical to that provided by a bicycle with conventional pneumatic tires (with regard to each of the individual tested properties as well as overall). In particular, the comfort and rolling resistance were experienced as almost the same for both bicycles. This is surprising because it is known from conventional massive inner tires - by objective measurements as well as by subjective testing - that an improvement of the rolling resistance always goes at the expense of the comfort, and *vice versa.* Thus, an assembly of the invention is capable of bringing both properties essentially up to the level of a conventional pneumatic tire. This makes that the assemblies of the invention perform similar to conventional pneumatic tires, and can be considered equivalent thereto.

The difference between both types of wheel assemblies, however, is that an assembly of the invention cannot run flat, which is of great advantage to the bicycle rider. Accordingly, replacement of conventional pneumatic tires with massive tires without losing the beneficial properties of conventional pneumatic tires is now within reach.

An inner tire of the invention is manufactured according to known methods. The E-TPU is industrially available as small beads, from which the inner tires were prepared by exposing the beads in a mould to steam pressure (*e.g.* in the range of 1.6-3.0 bar). The beads may have a globular or an egg-like shape.

An assembly of the invention can for example be prepared by pulling one of the two beads of the outer tire over one of the rim flanges of the wheel rim, and then pulling the inlay and the inner tire over the rim flange whilst pressing the inner tire into the outer tire. Once it is enclosed by the outer tire over its entire periphery, the second bead of the outer tire can be pulled of the rim flange to form the wheel assembly of the invention. Alternatively, the inner tire can be placed in the outer tire, and this composition may then be mounted onto a wheel rim comprising the inlay between de rim flanges by pulling the first of the two beads of the outer tire over one of the rim flanges of the wheel rim, and then pulling the second bead of the outer tire over the rim flange.

Accordingly, the present invention further relates to a method for preparing a vehicle wheel assembly wherein an inner tire is present in an outer tire, wherein the inner tire is in a compressed state, which state is compressed as compared to a relaxed state when the inner tire is not enclosed by the outer tire, the method comprising
- first providing 1) a wheel rim having two opposed circular rim flanges; and 2) an outer tire having two beads capable of being secured at the circular rim flanges of the wheel rim; and 3) a non-pneumatic inner tire comprising expanded thermoplastic polyurethane (E-TPU); wherein the maximally achievable volume defined by the outer tire, the inlay and eventually the wheel rim when the outer tire is secured at the circular rim flanges, is smaller than that of the non-pneumatic inner tire; and 4) an inlay; then
- pulling one of the beads (the first bead) of the outer tire over one of the rim flanges of the wheel rim;
- pulling the inlay over the other rim flange of the wheel rim so that it resides between the two rim flanges;
- pressing the inner tire into the outer tire;
- finally pulling the second bead of the outer tire over the same rim flange as that which has been used for pulling the first bead, to form the wheel assembly of the invention.

In the above method, the step of pressing the inner tire into the outer tire is most preferably performed after the step of pulling the inlay over the other rim flange. It is in principle also possible to perform the step of pressing the inner tire into the outer tire before pulling the first bead over one of the rim flanges. The last step of the mentioned steps is always the pulling of the second bead over one of the free rim flanges.

It is in principle also possible to pull the inlay over a rim flange and place it between the two rim flanges, and to mount the outer tire only thereafter. The latter may then be performed by 1) pulling the first bead over a rim flange and over the inlay; 2) pressing the inner tire into the outer tire; and 3) finally pulling the second bead of the outer tire over the same rim flange. Again, the pressing of the inner tire into the outer tire may also be performed before pulling the first bead over one of the rim flanges.

The inlay was found to provide an unexpected advantage during the preparation of a vehicle wheel assembly wherein the inner tire has a particular degree of compression. Since the inner tire also exerts a force on the inlay when it is in place in the wheel assembly, the inlay is also responsible for at least a part of the compression. During mounting, the pression on the inlay is only established in the final step, *i.e.* during the pulling the second bead of the outer tire over the rim flange. Moreover, during this step, the tire acts like a lever that rotates around one of the rim flanges. This makes it easier to complete the compression to the aimed degree of compression. In addition, the inner tire is substantially pressed into the outer tire in this step, so that the opening defined by the two beads is decreased, which further contributes to the ease of preparing a wheel assembly of the invention.

As stated above, it may in some cases be difficult to manually mount an inner tire in an outer tire on a wheel rim to prepare an assembly of the invention. This is in particular the case when the necessary degree of compression of the inner tire requires too much force for doing this manually. This problem may be solved by temporarily exposing the inner tire to a decreased pressure (*i.e.* a pressure of less than one atmosphere). In this way, a pressure difference between the closed cells and the surroundings will be generated because the E-TPU is not capable of expanding so much that the pressure in the closed cells keep up with that of the surrounding. The closed cells however equibrate with the surrounding of the inner tire, *i.e.* the pressure in the cells levels with that in the surrounding. This occurs by diffusion of the excess air from the closed cells through the walls of the closed cells into the surrounding. When the pressure is increased again (typically to atmospheric pressure), the closed cells collapse because the E-TPU is not capable of withstanding the increased pressure due its resilience. As a result, the inner tire occupies a reduced volume and becomes better manageable. In this state, the tire is placed into an outer tire and around a wheel rim, therewith preferably also securing both beads behind the rim flanges. This method is easier to carry out than in the case wherein the inner tire in its initial, relaxed, state. During prolonged exposure of the inner tire to the increased pressure (in particular atmospheric pressure), the pressure in the closed cells levels with that in the surrounding. Finally, the inner tire is present in the outer tire in a compressed fashion, which is the same situation as would occur after normal (for example manual) compression from state S2 to state S1. This way of assembling the wheel can be used to aid the manual assembly, or it can be used when it is not possible to assemble only by manual methods. The latter situation may occur when the intended assembly has more extreme values of C_{SA} (*e.g.* of 0.75 or lower) and/or when there is a large cross-sectional surface area of the tire cylinder (*e.g*. 40 mm or more).

Therefore, in an embodiment of the method for preparing a vehicle wheel assembly according to the invention, the inner tire, before being pressed into the outer tire, is
- exposed to a pressure of less than 1 bar; and then
- exposed to atmospheric pressure.

The pressure of less than one bar is for example 0.7 bar or less, 0.5 bar or less, 0.3 bar or less, 0.1 bar or less, 0.5 bar or less or 0.01 bar or less. Preferably, this pressure is gradually applied so as to ensure that the closed cells do not get damaged. The exposure to the pressure of less than 1 bar may be during 10 minutes or more, 30 minutes or more, 1 hour or more, 2 hours or more, 5 hours or more, 12 hours or more, or 24 hours or more.

A person skilled in the art will know how to gradually apply the decreased pressure without damaging the material and will know the duration of applying this pressure, or is able to find these out without undue experimentation and without exerting inventive effort.

Another method to make the compression of the inner tire more convenient is to make use of a compression mold wherein the inner tire is pre-compressed before placing it in assembly of the invention. In such mold, the shape and size of the inner tire are temporarily modified so that it can more easily be placed in an outer tire of an assembly of the invention. Due to the temporary nature of the modification, the pre-compressed tire is to be pressed into the outer tire directly after releasing it from the compression mold.

As described thus far, the inner tire and the outer tire in an assembly of the invention do not adhere to each other. In principle, when the assembly is disassembled, the inner and outer tire may then also easily be separated. In a particular embodiment, however, the inner tire and the outer tire are connected to each other, *i.e.* they adhere to each other. This has the effect that no friction occurs between the inner tire and the outer tire when riding with the wheel assembly. In addition, the inner tire an the outer tire cannot (temporarily) separate from each other during use. For example, the lateral faces on the outer tire do not loose contact with those of the inner tire, which results in less fatigue and damage of the outer tire, and reduces the rolling resistance of the wheel assembly. In addition, less damage occurs to the inner tire due to abrasion, because its connection to the outer tire does not allow relative movement of both tires so that abrasive forces do not get a chance.

The connection between the two tires can be realized by fusing them together, for example by heating a composite of both tires to a temperature at which both materials melt. In such cases the outer tire may be made of PU. It is particularly beneficial to use an outer tire of PU because of the chemical and physical compatibility with the E-TPU of the inner tire. Another method for connecting the two tires relies on the use of a glue.

### EXAMPLES

### Materials

Different wheel assemblies of the invention were prepared and compared with known wheel assemblies.

In the assemblies according to the invention, use was made of a Schwalbe Energizer Plus outer tire, a CST Platinum Protector, or a CST Xpedium Safe outer tire. All are commercially available outer tires of 28" and 40 mm width, and are commonly used tires in The Netherlands.

The E-TPU of the inner tire was obtained from BASF under the name "Infinergy"™. An inner tire of this material was obtained by processing globular beads of expanded TPU in a mould under steam pressure. The E-TPU had a density of approximately 250 kg m⁻³. The E-TPU inner tires were present in the outer tires under pressure, such that the SA in state S1 is approximately 0.74 times the SA in state S2. The diameter of the E-TPU inner tire in state S2 was 37 mm, with an SA_{S2} of 1075 mm²; SA_{S1} was 800 mm².

The assemblies that were tested for comparison were also assemblies of an outer tire and an inner tire. The tested outer tires were also tires of types mentioned above, while the inner tires concerned conventional pneumatic tires, tested for a range of air pressures, as well as a conventional non-pneumatic polyurethane tire.

### Methods

The wheel assemblies according to the invention were investigated by measuring their rolling resistance, driving comfort and deformation under loading with a realistic weight. The values were compared to those obtained when the same wheel assembly was provided with either a conventional pneumatic tire or a conventional non-pneumatic tire instead of the E-TPU tire.

Measuring of the rolling resistance was performed by making use of the pendulum rolling resistance test as described in "The world's most fuel efficient vehicle" (ISBN-10: 3728131342). The values provided in the experimental data are the average of three measurements.

The driving comfort was determined by measuring the vertical acceleration and decelation over time when a bicycle comprising two wheel assemblies of the type that is to be tested, rides over a certain trajectory. To this end, an accelerometer was mounted on the bicycle. A set of 1060 data points was initially obtained for each tire, from which a single value was obtained by averaging the 1060 data points. For each tire, the value provided in the experimental data representing the tire's comfort is the average of three measurements (*i.e.* of three sets of 1060 data points). For aesthetic reasons and easy viewing, the representative 32 highest and lowest amplitudes were selected and plotted as a graph (Figures 4-7).

To establish the degree of deformation under loading with a realistic weight, the contact surface area of the tire with the ground was measured. To this end, the wheel assembly comprising the tire was mounted in the rear part of a bicycle frame (the front part of the bicycle contained another wheel assembly the specifications of which are not relevant). The rear tire rested on a flat and hard surface, which was suitable for being covered with paint. A part of the thread of the outer tire was provided with a thin layer of paint by means of a roller. Then, the rear part of the bicycle was lifted and the painted part of the thread was placed in front of the ground's surface by rotating the wheel assembly. Thereafter, the rear part was slowly released so that the tire contacted the ground. The rear seat of the bicycle was then gradually loaded with the weight of a man of approximately 95 kg, by which a print of the tire on the surface was formed. Thereafter, the weight was cautiously relieved from the seat and the bicycle removed, leaving behind the print. After drying of the paint, the surface area of the print was determined using 3D CAD software (Autodesk Inventor 2015). During the entire printing procedure, the brakes of the rear wheel were completely blocked, preventing the wheel assembly from rolling, which would have resulted in a too large print.

The cross-sectional surface area of the non-pneumatic inner tires used in the experiments was measured by dissecting the inner tire and placing the resulting cross-section on a transparent glass plate with a mm-scale in two dimensions. Via a photograph taken from the other side of the glass plate and by using standard calculus means, the surface area of the cross-section was calculated. In case the inner tire was an E-TPU inner tire in state S1 (*i.e.* in the compressed state), then the inner tire was dissected in the assembly of the invention, together with the outer tire enclosing it. Directly after the dissection, the cross-section was placed against the glass plate and the photograph was taken. In this way, the measurement could be performed before any substantial expansion of the inner tire had occurred.

### Results

### 1. Measuring rolling resistance, riding comfort, contact surface area

### 1.1.a. Rolling resistance - influence of the inlay.

For each of the three outer tires, the rolling resistance of an assembly of the invention was compared with that of a corresponding assembly lacking an inlay and/or with that of a corresponding assembly containing a massive tire of polyurethane instead of E-TPU.

The results are displayed in Table 1 (assemblies of the invention being highlighted in grey). Table 1 demonstrates that the effect of the inlay only manifests in assemblies that have an E-TPU inner tire.

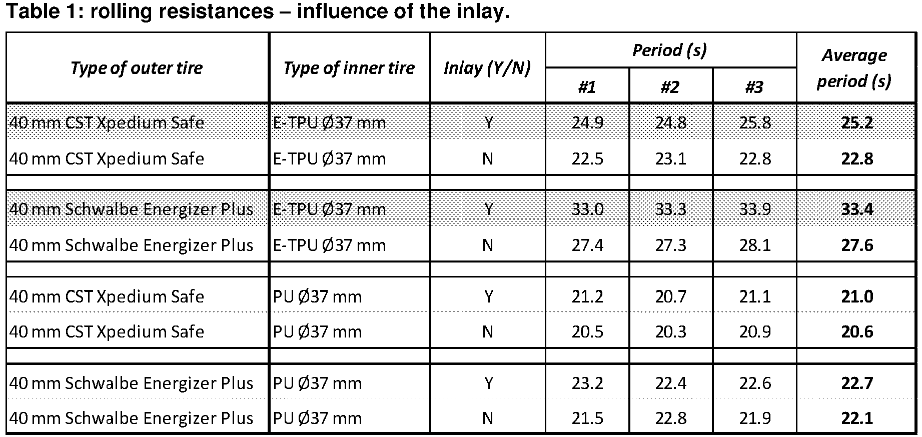

### 1.1.b. Rolling resistance - comparison with conventional pneumatic and non-pneumatic assemblies

Also, the rolling resistances of the assemblies of the invention were compared to those of conventional assemblies having either a pneumatic tire or a massive tire of PU.

Table 2 demonstrates that the assemblies of the invention (highlighted in grey) have a rolling resistance that is improved with respect to that of conventional massive PU inner tires. For each assembly with a particular outer tire, the rolling resistance is still little below that of the corresponding assemblies with pneumatic tires. Considering the fact that many cyclists on pneumatic tires have them at a too low pressure (*e.g.* 2 bar), the difference with pneumatic tires is in practice even smaller. Moreover, the rolling resistance of an assembly of the invention with a high end outer tire (Schwalbe Energizer Plus, 33.4 s) is even lower than that of a conventional assembly with a pneumatic tire at 2 bars and a medium quality outer tire (CST Platium Protector, 31.3 s).

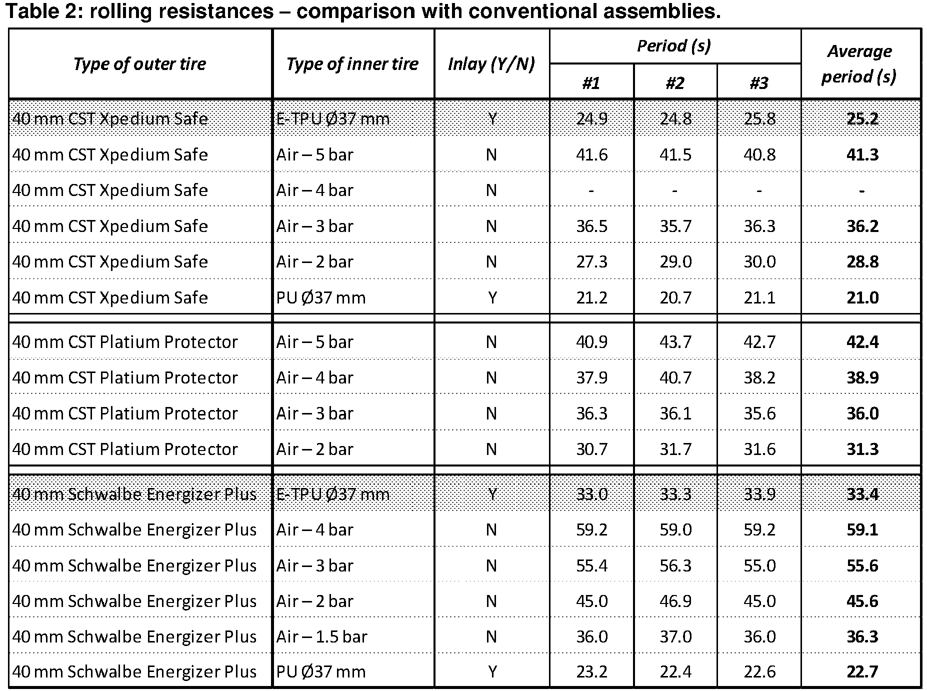

### 1.2.a. Comfort - influence of the inlay.

For the Schwalbe Energizer Plus outer tire, the comfort of an assembly of the invention was compared with that of the corresponding assembly lacking an inlay.

The results are displayed in Figure 4. This figure demonstrates that an assembly with an E-TPU inner tire looses a little bit of comfort when an inlay is present (as compared to the absence of the inlay).

### 1.2.b. Comfort - comparison with conventional non-pneumatic assemblies

For the Schwalbe Energizer Plus outer tire and the CST Xpedium Safe outer tire, the comfort of an assembly of the invention was compared with that of a conventional assembly containing a massive tire of polyurethane (without an inlay - the presence or absence of an inlay in combination with a conventional polyurethane inner tire didn't make a siginificant difference for the comfort, as was also found to be the case for the rolling resistances).

The results are displayed in Figure 4 (Schwalbe Energizer Plus) and Figure 5 (CST Xpedium Safe). Herein, it is demonstrated that the comfort of an assembly of the invention is much higher than that of a conventional assembly with a PU inner tire.

### 1.2.c. Comfort - comparison with conventional pneumatic assemblies

For the Schwalbe Energizer Plus outer tire and the CST Xpedium Safe outer tire, the comfort of an assembly of the invention was compared with that of a range of corresponding assemblies having a pneumatic inner tires at different pressures (without an inlay). The results are displayed in Figure 6 (Schwalbe Energizer Plus) and Figure 7 (CST Xpedium Safe). Herein, it is demonstrated that the comfort of an assembly of the invention is (for both types of outer tires) comparable to that of an assembly having a pneumatic inner tire at a pressure of approximately 3 bar. Figures 6.1 and 7.1 each contain the complete set of four graphs: one representing an assembly of the invention and three representing an assembly having a pneumatic inner tire of 2, 3 and 4 bar. For the sake of clarity, Figures 6.2, 6.3, 7.2 and 7.3 contain selections thereof.

In addition to the visualization in Figures 4-7, the degree of comfort of the tires was also compared on the basis of the average vertical acceleration of each tire. The average vertical acceleration of a tire was calculated by averaging the 1060 data points of the tire. The values for the average accelerations thus obtained are listed in Table 3. It can be seen that these are in line with the picture that emerges from the comfort measurements as displayed in Figures 4-7. For example, a higher air pressure in a pneumatic tire gave a higher average acceleration and thus a lower comfort; and the massive PU tire resulted by far in the highest acceleration and thus yielded the assembly with the lowest comfort. An assembly of the invention, on the other hand, gave a comfort that was within that of pneumatic assemblies when pressurized in the range of 2-4 bar. In particular, it can be seen that with the 40 mm Schwalbe Energizer Plus outer tire, the comfort of an assembly of the invention corresponds to that of a pneumatic tire inflated to a pressure of slightly above 3 bar (the average accelerations are 1.37 and 1.34, respectively). An assembly with this tire was used in the panel test (see below under point 2).

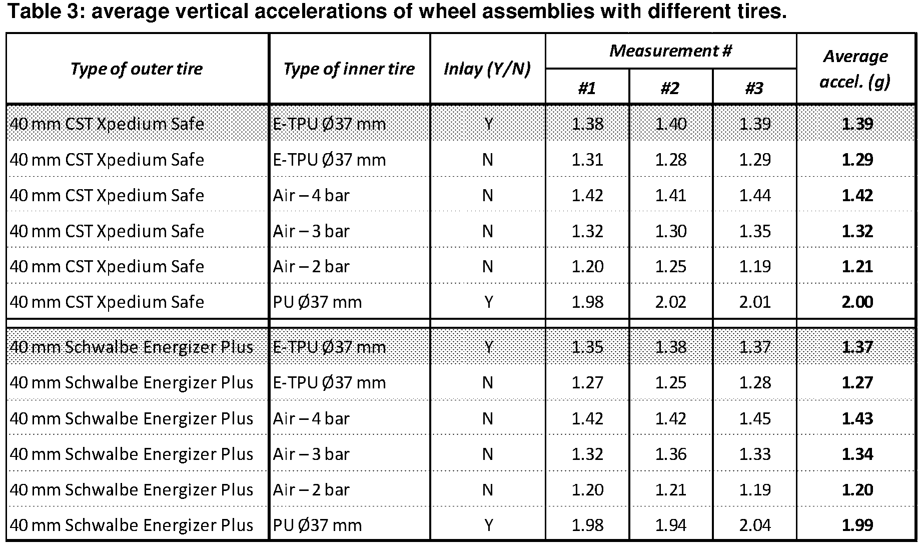

Also, with the 40 mm CST Xpedium Safe outer tire, the comfort of an assembly of the invention corresponds to that of a pneumatic tire inflated to a pressure of approximately 3.5 bar (the respective average accelerations are 1.39 and 1.37, the latter by interpolation of 1.32 (3 bar) and 1.42 (4 bar)).

### 1.3.a. Contact surface area - influence of the inlay

For the Schwalbe Energizer Plus outer tire, the contact surface area of an assembly of the invention with the ground was compared to that of the corresponding assembly lacking an inlay. The surface of the first was 2916 mm², while that of the latter was 3190 mm² (see also table 4), which is in line with the above findings that the presence of the inlay reduces the rolling resistance and slightly reduces the comfort.

### 1.3.b. Contact surface area - comparison with conventional pneumatic assemblies

For the CST Xpedium Safe outer tire, the contact surface area of an assembly of the invention was compared with that of two corresponding assemblies having a pneumatic inner tires at a pressure of 2 and 3 bars (without an inlay). The results are displayed in Table 4 (assembly of the invention being highlighted in grey). Herein, it is demonstrated that the contact surface area of an assembly of the invention is comparable to that of an assembly having a pneumatic inner tire at a pressure of approximately 3 bar.

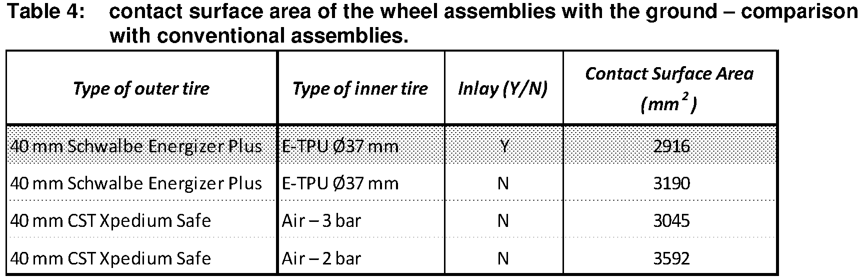

### 2. Panel test

A bicycle having in two of its wheels an assembly of the invention was used by a panel composed of 45 Dutch experienced bicycle riders. As a comparative, they also used a bicycle with conventional pneumatic wheel assemblies, inflated to a pressure of 3 bar. The two bicyles used in this panel test were essentially identical, except for the wheel assemblies. The pressure of 3 bar was chosen because this pressure gave vertical accelerations in the comfort measurements that were similar to those of the particular assembly of the invention (see also section 1.2.c. of the Examples and Table 3). In other words, with this pressure, a hardness of the tire is reached that is comparable to the hardness of the tire that has an inner tire of E-TPU.

The assemblies of the invention used in the bicycle were those described in the above section "Materials". The bicycle riders were intercepted at a resting place on a busy Dutch bicycle route and asked to participate in the panel test.

The test was performed in a so-called double blind manner, *i.e.* neither the panel members nor the team of investigators responsible for the panel test knew which of the two bicycles contained the pneumatic inner tire or the E-TPU inner tire. In order to keep the bicycles visually identical, the bicycle with the assemblies of the invention was equipped with a fake air valve on each rim.

The form on which the panel members had to note their experiences contained 10 questions. Answering these questions required choosing the appropriate point of a Likert scale. The scale contained five choices: 1. Poor; 2. Fair; 3. Good; 4. Very good; 5. Excellent. The questions were the following:
1. How was your riding experience in general?
2. How was you riding experience on the flat (red) asphalt?
3. How was you riding experience on the brick road?
4. Wat is your opinion on the rolling resistance in general?
5. Wat is your opinion on the comfort on the brick road?
6. Wat is your opinion on the comfort during driving onto the curb?
7. Wat is your opinion on the comfort during driving off the curb?
8. Wat is your opinion on the driving behavior of the bicycle in the turns?
9. Wat is your opinion on the braking of the bicycle?
10. Wat is your opinion on the tension of the tires?

At the end, the form contained a remark section, wherein the panel members could put additional remarks on their own discretion.

The answers of all 45 respondents on the questions are summarized in Table 5. Bicycle 1 has wheel assemblies of the invention and bicycle 2 has the conventional pneumatic wheel assemblies.

**Table 5. Summary of the results of the panel test.**

| | **Bicycle** | **Poor** | **Fair** | **Good** | **Very Good** | **Excellent** |
|---|---|---|---|---|---|---|
| **Q.1** | 1 (E-TPU) | 0 | 0 | 1 | 25 | 19 |
| | 2 (pneum) | 0 | 0 | 1 | 24 | 20 |
| **Q. 2** | 1 (E-TPU) | 0 | 0 | 0 | 29 | 16 |
| | 2 (pneum) | 0 | 0 | 1 | 28 | 16 |
| **Q. 3** | 1 (E-TPU) | 0 | 0 | 0 | 36 | 9 |
| | 2 (pneum) | 0 | 0 | 1 | 33 | 11 |
| **Q. 4** | 1 (E-TPU) | 0 | 0 | 0 | 34 | 11 |
| | 2 (pneum) | 0 | 0 | 0 | 33 | 12 |
| **Q. 5** | 1 (E-TPU) | 0 | 0 | 3 | 35 | 7 |
| | 2 (pneum) | 0 | 0 | 2 | 35 | 8 |
| **Q. 6** | 1 (E-TPU) | 0 | 0 | 2 | 37 | 6 |
| | 2 (pneum) | 0 | 0 | 2 | 40 | 3 |
| **Q. 7** | 1 (E-TPU) | 0 | 0 | 2 | 40 | 3 |
| | 2 (pneum) | 0 | 0 | 2 | 39 | 4 |
| **Q. 8** | 1 (E-TPU) | 0 | 0 | 2 | 36 | 7 |
| | 2 (pneum) | 0 | 0 | 1 | 34 | 10 |
| **Q. 9** | 1 (E-TPU) | 0 | 0 | 0 | 37 | 8 |
| | 2 (pneum) | 0 | 0 | 0 | 35 | 10 |
| **Q. 10** | 1 (E-TPU) | 0 | 0 | 0 | 29 | 16 |
| | 2 (pneum) | 0 | 0 | 1 | 30 | 14 |

Questions 1-3 are directed at the riding experience, which is a catch-all of all factors that contribute to how a ride on the particular bicycle is perceived. The answers to these three questions demonstrate that the bicycle with wheel assemblies of the invention gives an experience to the respondent that is substantially the same as that of the comparative bicycle with pneumatic tires.

In question 4, the respondent is asked to give his opinion on the rolling resistance. The answers indicate that the perception of rolling resistance is substantially the same for both bicycles.

Questions 5-7 are directed at the comfort. A bicycle having assemblies of the invention was found to have a comfort on the brick road that is similar to that of a bicycle having pneumatic tires, while ascending the curbs is experienced as a bit more comfortable with a bicycle having assemblies of the invention.

In questions 8 and 9, the respondent is asked to give his opinion on the bicycle's behavior in the turns and on the braking of the bicycles, respectively. In each of the two areas, the performance of the bicycle with assemblies of the invention is slightly behind that of the comparative bicycle having pneumatic tires.

Question 10 is about the tension of the tires. The judgements of the respondents confirm that the hardness of a tire of the invention is considered equivalent to that of a pneumatic tire at 3 bar. Moreover, it appears that they are satisfied with such pressure, since 29 of the 45 respondents rate the pressure as "very good", while 16 of them even rate it as "excellent". No respondent awarded the tension of the E-TPU tire with "poor", "fair", or "good".

The total score of the two bicycles on all ten questions can be caught in one value by calculating the weighed sum of the choices on the Likart scale. These results are displayed in Table 6. The total scores for both bicycles differ by about 0.26%, which can be considered negligible.

In addition, on some forms, the remark in the remark section contained the statement that there was in fact no difference noticed between both bicycles. This message was in other cases also given orally by the respondents after completing the rides on both bicycles.

In conclusion, it can be stated that the answers of the panel test reveal that a bicycle with assemblies of the invention has a performance and a riding perception that is similar to that of a comparative bicycle with pneumatic tires.

**Table 6. Weighed sum of the test results and total score for both bicycles.**

| | **Poor** | **Fair** | **Good** | **Very Good** | **Excellent** | **Total score** |
|---|---|---|---|---|---|---|
| 1 (E-TPU) | 1x0 = 0 | 2x0 = 0 | 3x10 = 30 | 4x338 = 1352 | 5x102 = 510 | **1892** |
| 2 (pneum.) | 1x0 = 0 | 2x0 = 0 | 3x11 = 33 | 4x331 = 1324 | 5x108 = 540 | **1897** |

## Claims

1. Vehicle wheel assembly (2), comprising
- a wheel rim (4) having a rim bottom (6) and two circular rim flanges (5) opposing each other;
- an outer tire (3) having two beads (7) secured at the circular rim flanges;
- a non-pneumatic inner tire (1), which inner tire (1) is partly enclosed by the outer tire (3); wherein:
1) the inner tire (1) in the assembly (2) is in a compressed state S1, which state is compressed as compared to a relaxed state S2 when the inner tire (1) is not enclosed by the outer tire (3), the compression being such that the cross-sectional surface area SA of the inner tire (1), which area is perpendicular to the plane of the tire, is smaller in state S1 than in state S2; and
2) an inlay (8) is present between the rim bottom (6) and the inner tire (1), wherein the inlay (8) is in contact with the inner tire (1) as well as with the rim bottom (6) ; and
**characterized in that**:
3) the non-pneumatic inner tire (1) comprises expanded thermoplastic polyurethane (E-TPU).

2. Vehicle wheel assembly (2) according to claim 1, wherein the inner tire (1), when in the relaxed state S2, has a density in the range of 150-400 kg m⁻³, in particular in the range of 200-300 kg m⁻³.

3. Vehicle wheel assembly (2) according to claim 1 or 2, wherein the SA in state S1 is 0.96 times or less the SA in state S2, in particular it is 0.90 times or less.

4. Vehicle wheel assembly (2) according to any of claims 1-3, wherein the diameter DM_{S2} of the inner tire (1) in state S2 is in the range of 30-40 mm, or wherein the surface area SA_{S2} of the inner tire (1) in state S2 is in the range of 700-1250 mm².

5. Vehicle wheel assembly (2) according to any of claims 1-4, wherein the distance between the rim flanges (5) is in the range of 16-26 mm.

6. Vehicle wheel assembly (2) according to any of claims 1-5, wherein the inner tire (1) and the outer tire (3) are connected to each other.

7. Vehicle wheel assembly (2) according to any of claims 1-6, wherein the inlay (8) has a thickness of at least 5 mm, the thickness being defined as the distance from the rim bottom (6) to the outer circumference of the inlay (8) measured in the radial direction of the wheel assembly (2).

8. Vehicle wheel assembly (2) according to any of claims 1-7, wherein the inlay (8) is made of a material that has a hardness of Shore 85A or more.

9. Vehicle wheel assembly (2) according to any of claims 1-6, wherein at at least part of the lateral faces of the outer tire (3) in the assembly (2), the thickness is 0.75 mm or less, in particular 0.50 mm or less.

10. Vehicle comprising a vehicle wheel assembly (2) according to any of the preceding claims, wherein the vehicle is selected from the group of bicycles, wheelchairs, electric bicycles, mobility scooters, scooters, motorcycles, cars, trucks, wheelbarrows, trolleys, strollers, prams, and hand trucks.

11. Method for preparing a vehicle wheel assembly (2) according to any of claims 1-9, comprising
- providing
1) a wheel rim (4) having two circular rim flanges (5) opposing each other;
2) an outer tire (3) having beads (7) capable of being secured at the circular rim flanges (5) of the wheel rim (4);
3) a non-pneumatic inner tire (1) comprising expanded thermoplastic polyurethane (E-TPU); then
- pulling one of the beads (7) of the outer tire (3) over one of the rim flanges (5) of the wheel rim (4);
- pulling the inlay (8) over the other rim flange (5) of the wheel rim (4) so that it resides between the two rim flanges (5);
- pressing the inner tire (1) into the outer tire (3);
- finally pulling the second bead (7) of the outer tire (3) over the rim flange (5) to form the wheel assembly (2) of the invention.

12. Method according to claim 11, wherein the inner tire (1), before being pressed into the outer tire (3), is pre-compressed in a compression mold.

13. Method according to claim 11, wherein the inner tire (1), before being pressed into the outer tire (3), is
- exposed to a pressure of less than 1 bar; and thereafter
- exposed to atmospheric pressure.

## Patentansprüche

1. Fahrzeugradanordnung (2), umfassend
- eine Radfelge (4) mit einem Felgenboden (6) und zwei einander gegenüberliegenden kreisförmigen Felgenflanschen (5);
- einen Außenreifen (3) mit zwei Wülsten (7), die an den kreisförmigen Felgenflanschen befestigt sind;
- einen nicht pneumatischen Innenreifen (1), wobei der Innenreifen (1) teilweise vom Außenreifen (3) umschlossen ist;
wobei:
1) der Innenreifen (1) in der Anordnung (2) sich in einem komprimierten Zustand S1 befindet, der im Vergleich zu einem entspannten Zustand S2 komprimiert ist, wenn der Innenreifen (1) nicht vom Außenreifen (3) umschlossen ist, wobei die Kompression so beschaffen ist, dass die Querschnittsfläche SA des Innenreifens (1), deren Fläche senkrecht zur Ebene des Reifens ist, im Zustand S1 kleiner ist als im Zustand S2; und
2) eine Einlage (8) zwischen dem Felgenboden (6) und dem Innenreifen (1) vorhanden ist, wobei die Einlage (8) sowohl mit dem Innenreifen (1) als auch mit dem Felgenboden (6) in Kontakt steht; und
**dadurch gekennzeichnet, dass**:
3) der nicht pneumatische Innenreifen (1) aus expandiertem thermoplastischem Polyurethan (E-TPU) besteht.

2. Fahrzeugradanordnung (2) nach Anspruch 1, wobei der innere Reifen (1), wenn er im entspannten Zustand S2 ist, eine Dichte im Bereich von 150-400 kg m⁻³, insbesondere im Bereich von 200-300 kg m⁻³ aufweist.

3. Fahrzeugradanordnung (2) nach Anspruch 1 oder 2, wobei die SA im Zustand S1 das 0,96-Fache oder weniger der SA im Zustand S2 beträgt, insbesondere das 0,90-Fache oder weniger.

4. Fahrzeugradanordnung (2) nach einem der Ansprüche 1 bis 3, wobei der Durchmesser DM_{S2} des Innenreifens (1) im Zustand S2 im Bereich von 30 bis 40 mm liegt oder wobei die Oberfläche SA_{S2} des Innenreifens (1) im Zustand S2 im Bereich von 700-1250 mm² liegt.

5. Fahrzeugradanordnung (2) nach einem der Ansprüche 1 bis 4, wobei der Abstand zwischen den Felgenflanschen (5) im Bereich von 16 bis 26 mm liegt.

6. Fahrzeugradanordnung (2) nach einem der Ansprüche 1 bis 5, wobei der Innenreifen (1) und der Außenreifen (3) miteinander verbunden sind.

7. Fahrzeugradanordnung (2) nach einem der Ansprüche 1 bis 6, wobei die Einlage (8) eine Dicke von mindestens 5 mm aufweist, wobei die Dicke als der Abstand vom Felgenboden (6) zum Außenumfang der Einlage (8), gemessen in radialer Richtung der Radbaugruppe (2), definiert ist.

8. Fahrzeugradanordnung (2) nach einem der Ansprüche 1 bis 7, wobei die Einlage (8) aus einem Material hergestellt ist, das eine Härte von Shore 85A oder mehr aufweist.

9. Fahrzeugradanordnung (2) nach einem der Ansprüche 1 bis 6, wobei bei mindestens einem Teil der Seitenflächen des Außenreifens (3) in der Anordnung (2) die Dicke 0,75 mm oder weniger beträgt, insbesondere 0,50 mm oder weniger.

10. Fahrzeug mit einer Fahrzeugradanordnung (2) nach einem der vorhergehenden Ansprüche, wobei das Fahrzeug ausgewählt ist aus der Gruppe von Fahrrädern, Rollstühlen, Elektrofahrrädern, Mobilitätsrollern, Rollern, Motorrädern, Autos, Lastwagen, Schubkarren, Transportkarren, Buggys, Kinderwagen und Handkarren.

11. Verfahren zur Herstellung einer Fahrzeugradanordnung (2) nach einem der Ansprüche 1 bis 9, umfassend
- Bereitstellung
1) einer Felge (4) mit zwei einander gegenüberliegenden kreisförmigen Felgenflanschen (5);
2) einen Außenreifen (3) mit Wülsten (7), die an den kreisförmigen Felgenflanschen (5) der Radfelge (4) befestigt werden können;
3) einen nicht pneumatischen Innenreifen (1), umfassend expandiertes thermoplastisches Polyurethan (E-TPU); dann
- Ziehen einer der Wülste (7) des Außenreifens (3) über einen der Felgenflansche (5) der Felge (4);
- Ziehen der Einlage (8) über den anderen Felgenflansch (5) der Radfelge (4), so dass sie sich zwischen den beiden Felgenflanschen (5) befindet;
- Drücken des Innenreifens (1) in den Außenreifen (3);
- schließlich Ziehen des zweiten Wulst (7) des Außenreifens (3) über den Felgenflansch (5), um die erfindungsgemäße Radanordnung (2) zu bilden.

12. Verfahren nach Anspruch 11, wobei der Innenreifen (1) vor dem Einpressen in den Außenreifen (3) in einer Kompressionsform vorkomprimiert wird.

13. Verfahren nach Anspruch 11, wobei der Innenreifen (1) vor dem Einpressen in den Außenreifen (3)
- einem Druck von weniger als 1 bar ausgesetzt ist; und danach
- atmosphärischem Druck ausgesetzt ist.

## Revendications

1. Ensemble roue de véhicule (2), comprenant
- une jante de roue (4) ayant un fond de jante (6) et deux joues de jante (5) circulaires opposées l'une à l'autre ;
- un pneu externe (3) ayant deux talons (7) fixés au niveau des joues de jante circulaires ;
- un pneu interne sans air (1), lequel pneu interne (1) est partiellement entouré par le pneu externe (3) ;
dans lequel :
1) le pneu interne (1) de l'ensemble (2) est dans un état comprimé S1, lequel état est comprimé par rapport à un état détendu S2 lorsque le pneu interne (1) n'est pas entouré par le pneu externe (3), la compression étant telle que la superficie de section transversale SA du pneu interne (1), qui est perpendiculaire au plan du pneu, est plus petite dans l'état S1 que dans l'état S2 ; et
2) un empiècement (8) est présent entre le fond de jante (6) et le pneu interne (1), l'empiècement (8) étant en contact avec le pneu interne (1) ainsi qu'avec le fond de jante (6) ; et
**caractérisé en ce que** :
3) le pneu interne sans air (1) comprend du polyuréthane thermoplastique expansé (E-TPU).

2. Ensemble roue de véhicule (2) selon la revendication 1, dans lequel le pneu interne (1), lorsqu'il est à l'état détendu S2, a une densité comprise dans la plage de 150 à 400 kg m⁻³, en particulier dans la plage de 200 à 300 kg m⁻³.

3. Ensemble roue de véhicule (2) selon la revendication 1 ou 2, dans lequel la SA à l'état S1 est égale ou inférieure à 0,96 fois la SA à l'état S2, en particulier elle est égale ou inférieure à 0,90 fois.

4. Ensemble roue de véhicule (2) selon l'une quelconque des revendications 1 à 3, dans lequel le diamètre DM_{S2} du pneu interne (1) à l'état S2 est compris dans la plage de 30 à 40 mm, ou dans lequel la superficie SA_{S2} du pneu interne (1) à l'état S2 est comprise dans la plage de 700 à 1250 mm².

5. Ensemble roue de véhicule (2) selon l'une quelconque des revendications 1 à 4, dans lequel la distance entre les joues de jante (5) est comprise dans la plage allant de 16 à 26 mm.

6. Ensemble roue de véhicule (2) selon l'une quelconque des revendications 1 à 5, dans lequel le pneu interne (1) et le pneu externe (3) sont reliés l'un à l'autre.

7. Ensemble roue de véhicule (2) selon l'une quelconque des revendications 1 à 6, dans lequel l'empiècement (8) a une épaisseur d'au moins 5 mm, l'épaisseur étant définie comme la distance entre le fond de jante (6) et la circonférence extérieure de l'empiècement (8) mesurée dans la direction radiale de l'ensemble roue (2).

8. Ensemble roue de véhicule (2) selon l'une quelconque des revendications 1 à 7, dans lequel l'empiècement (8) est constitué d'un matériau qui a une dureté supérieure ou égale à Shore 85A.

9. Ensemble roue de véhicule (2) selon l'une quelconque des revendications 1 à 6, dans lequel au niveau d'au moins une partie des faces latérales du pneu externe (3) de l'ensemble (2), l'épaisseur est inférieure ou égale à 0,75 mm, en particulier inférieure ou égale à 0,50 mm.

10. Véhicule comprenant un ensemble roue de véhicule (2) selon l'une quelconque des revendications précédentes, le véhicule étant choisi dans le groupe des vélos, fauteuils roulants, vélos électriques, scooters de mobilité, scooters, motos, voitures, camions, brouettes, chariots, poussettes, landaus et diables.

11. Procédé de préparation d'un ensemble roue de véhicule (2) selon l'une quelconque des revendications 1 à 9, comprenant
- la fourniture de
1) une jante de roue (4) ayant deux joues de jante (5) circulaires opposées l'une à l'autre ;
2) un pneu externe (3) ayant deux talons (7) pouvant être fixés au niveau des joues de jante circulaires (5) de la jante de roue (4) ;
3) un pneu interne sans air (1) comprenant du polyuréthane thermoplastique expansé (E-TPU) ; puis
- la traction de l'un des talons (7) du pneu externe (3) sur l'une des joues de jante (5) de la jante de roue (4) ;
- la traction de l'empiècement (8) sur l'autre joue de jante (5) de la jante de roue (4) de sorte qu'il réside entre les deux joues de jante (5) ;
- la pression du pneu interne (1) dans le pneu externe (3) ;
- enfin la traction du second talon (7) du pneu externe (3) sur la joue de jante (5) pour former l'ensemble roue (2) selon l'invention.

12. Procédé selon la revendication 11, dans lequel le pneu interne (1), avant d'être pressé dans le pneu externe (3), est pré-comprimé dans un moule de compression.

13. Procédé selon la revendication 11, dans lequel le pneu interne (1), avant d'être pressé dans le pneu externe (3), est
- exposé à une pression inférieure à 1 bar ; et ensuite
- exposé à la pression atmosphérique.
